**Europäisches Patentamt**

**European Patent Office**

**Office européen des brevets**

(11) Veröffentlichungsnummer: **0 246 491**
**A2**

(12) **EUROPÄISCHE PATENTANMELDUNG**

(21) Anmeldenummer: **87106562.9**

(22) Anmeldetag: **06.05.87**

(51) Int. Cl.³: **H 02 M 3/335**

(30) Priorität: **14.05.86 DE 3616160**

(43) Veröffentlichungstag der Anmeldung:
**25.11.87 Patentblatt 87/48**

(84) Benannte Vertragsstaaten:
**AT BE CH FR GB LI NL**

(71) Anmelder: **Eckardt AG**
**Pragstrasse 82**
**D-7000 Stuttgart 50(DE)**

(72) Erfinder: **Neumann, Erhard**
**Hellesweg 5**
**D-7062 Rudersberg(DE)**

(74) Vertreter: **Wilhelm, Hans-Herbert, Dr.-Ing.**
**Wilhelm & Dauster Patentanwälte Hospitalstrasse 8**
**D-7000 Stuttgart 1(DE)**

(54) DC/DC-Eintaktdurchflusswandler.

(57) DC/DC-Eintaktdurchflußwandler mit einem Transformator und einem von einer Ansteuerschaltung geschalteten, mit einer Entlastungsschaltung versehenen Schalttransistor. Durch Ausbildung und Dimensionierung der Entlastungsschaltung ist die übliche Entmagnetisierungswicklung des Transformators mit Diode entbehrlich, das Tastverhältnis kann sehr hoch – bis etwa 0,8 – gewählt werden, und durch Einschalten des Schalttransistors während des maximalen negativen Magnetisierungsstromes kann eine Verdoppelung der nutzbaren Induktion erreicht werden.

Fig. 1

EP 0 246 491 A2

Croydon Printing Company Ltd.

## DC/DC-Eintaktdurchflußwandler

Die Erfindung bezieht sich auf einen DC/DC-Eintaktdurchflußwandler nach dem Oberbegriff des Patentanspruches 1. Derartige
Wandler sind beispielsweise aus J. Wüstehube: "Schaltnetzteile", expert-Verlag, 2. Aufl. 1982, S. 81, Bild 2.23, bekannt.

Bei der bekannten Art eines Eintaktdurchflußwandlers wird
während der Leitphase des Transistors der Strom des Transformators von der Primärwicklung in die Sekundärwicklung transformiert und fließt durch die Gleichrichterdiode und die Speicherdrossel in die am Ausgang angeschlossene Last. Dabei steigt der
Strom in der Speicherdrossel und somit auch der Ausgangsstrom
linear an. Wird der Transistor gesperrt, so sperrt auch die
Gleichrichterdiode, und die Freilaufdiode übernimmt den abnehmenden Strom der Drossel.

Die während der Leitphase vom Transformator aufgenommene Magnetisierungsenergie fließt während der Sperrphase über die Entmagnetisierungswicklung und die Diode in den Eingangskondensator zurück. Bevor aber die Entmagnetisierungswicklung Strom
führt und die Kollektor-Emitter-Spannung begrenzt, ergibt sich
ein steiler Anstieg der Kollektor-Emitter-Spannung und ein
Spannungsüberschwinger, der von der Höhe des Kollektorstromes,
den parasitären Induktivitäten zwischen Primär- und Freilaufwicklung und der Schaltgeschwindigkeit des Transistors abhängt.

Um diese unerwünschten Effekte abzuschwächen, werden RCD- oder
RC-Beschaltungen des Transistors eingesetzt.

Beim Betreiben eines solchen Wandlers, z.B. mit einer Batterie
am Eingang, muß das Übersetzungsverhältnis der Windungszahlen
für die geringste Batterieentladespannung ausgelegt werden. Bei
hohen Strömen, hohen Übertragungsfrequenzen und niederen
Ausgangsspannungen können die Umschaltzeiten der Dioden nicht
mehr vernachlässigt werden, so daß das Tastverhältnis $V_{T\ eff} <$
0,5 sein muß und häufig mit $V_{T\ MAX}$ = 0,45 festgelegt wird
(siehe Wüstehube: "Schaltnetzteile", S. 64, vor 2.9).

Die Nachteile der bekannten Ausführungen ergeben sich aus dem
Gesagten, da durch das geringe maximale Tastverhältnis von $V_T$ =
0,45 bei relativ kleinen Werten der Konstanten K (K = 2...3)
und bei höheren Ausgangsleistungen des Eintaktdurchflußwandlers
($P_W >$ 100 W) hohe Kollektorschaltströme auftreten und bei bipolaren Transistoren in den Ausschaltentlastungen Verlustleistung entsteht.

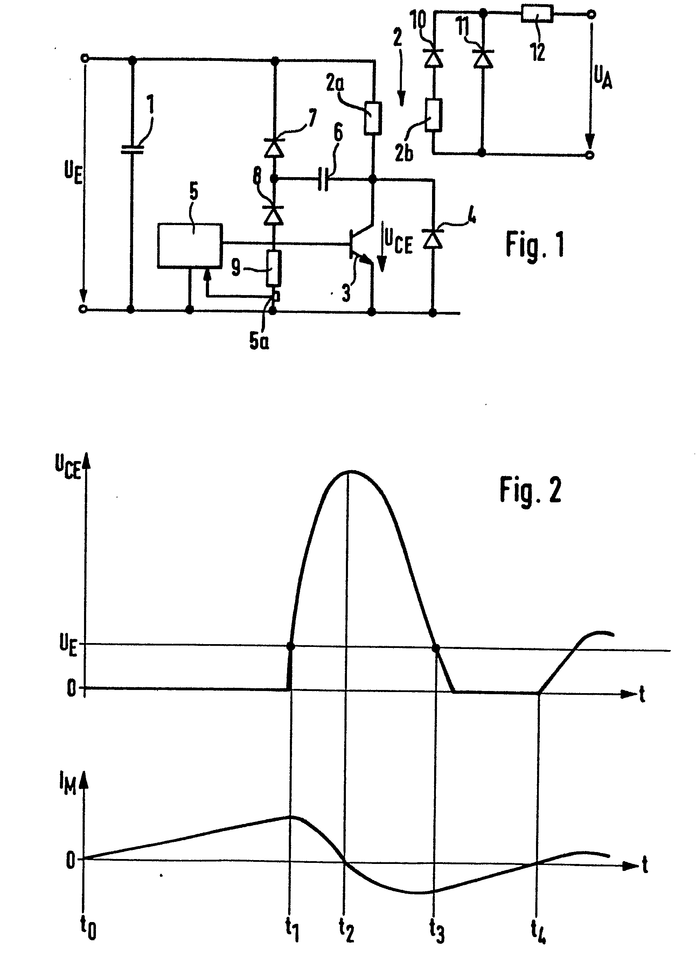

In der DE-OS 2 719 026 ist eine Schaltungsanordnung zur Verringerung der Ausschaltverluste in Halbleiterschaltern offenbart,
die bei Durchflußumrichtern angewandt werden kann. Die Schaltung der Fig. 2 zeigt die im Oberbegriff des Patentanspruches 1
enthaltenen Merkmale, weist jedoch ebenfalls die bereits erwähnten Nachteile auf.

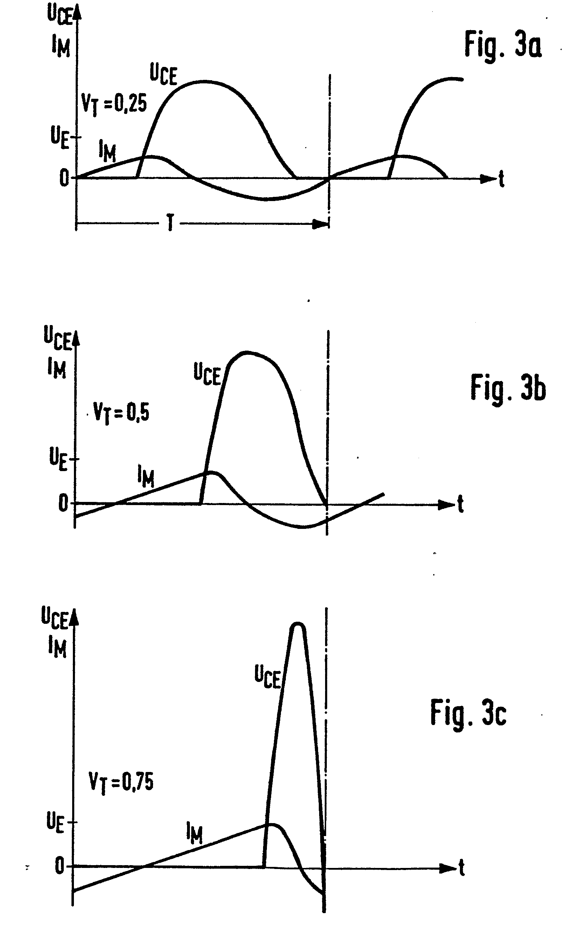

Aus der DE-OS 1 952 016 sind Vorrichtungen zur Verwendung bei
statischen Gleichspannungswandlern bekannt. Diese Vorrichtungen
betreffen jedoch keine Durchflußwandler nach dem Oberbegriff
des Patentanspruches 1. So ist beispielsweise in der Fig. 3 ein
Sperrwandler gezeigt, dessen Funktion sich von derjenigen eines
Durchflußwandlers grundlegend unterscheidet.

Aus der Zeitschrift "Elektronik", Heft 6/84 vom 23.03.1984, S.
80 bis 82, sind Drosseln mit permanent-magnetischer Vormagnetisierung und aus derselben Zeitschrift, Heft 24/82 vom
03.12.1982, S. 101 und 102, sind Ferritwerkstoffe und Kerne für
Schaltznetzteile bekannt.

Der Erfindung liegt die Aufgabe zugrunde, einen Eintaktdurchflußwandler zu schaffen, der bei möglichst großem Tastverhältnis einen geringen Transistor-Schaltstrom, ein günstiges spezifisches Leistungsgewicht und Leistungsvolumen sowie einen guten
Wirkungsgrad bei hoher Laufsicherheit aufweist.

Diese Aufgabe wird erfindungsgemäß durch die im Kennzeichen des
Patentanspruchs 1 genannten Merkmale gelöst.

Aus einem Vergleich mit der bekannten Schaltung ist zu sehen,
daß bei der erfindungsgemäßen Lösung der Transformator keine
besondere Entmagnetisierungswicklung aufweist und der Schalttransistor mit einer prinzipiell verlustfreien Ausschaltentlastung versehen wird. Diese übernimmt während des Spannungsanstiegs am Kollektor den Primärstrom des Transformators und
erzeugt in einem Umschwingvorgang zwischen Magnetisierungsplus Streuenergie und der Kondensatorenergie eine Gegenspannung, die den Entmagnetisierungsvorgang erzwingt. Wenn diese
Gegenspannung ihr Maximum erreicht hat, beginnt der Rückschwingvorgang, wobei die im Kondensator gespeicherte Energie
über die Primärwicklung in die Eingangskapazität zurückfließt.
Dieser Strom führt zu einer negativen Magnetisierung des
Transformators mit einer Amplitude, die von der zuvor in den
Kondensator eingespeisten Energie abhängt. Bei hoher Leistung
und hohem Tastverhältnis, wenn der negative Magnetisierungsstrom durch früheres Einschalten des Schalttransistors nicht
mehr auf Null abklingen kann, wird auch der negative Bereich
der Magnetisierungskennlinie zur Energieübertragung eingesetzt,
so daß sich die nutzbare magnetische Induktion $\Delta B$ bis auf den
doppelten Wert erhöht. Die magnetischen Kreise von Transformator und Umschwingdrossel werden so ausgelegt, daß sie bei hohen
Belastungen teilweise gesättigt werden und so die Zeiten für
die Umschwingvorgänge reduziert werden.

Während beim Betreiben des Wandlers mit konstanter Frequenz und
Pulsbreitenmodulation die Bauelemente auf die kleinste Spannung bei maximalem Ausgangsstrom ($U_E = U_{EMIN}$, $V_T = V_{TMAX}$, $i_M = -i_{MMAX}$) ausgelegt werden, wird bei einem Wandler mit variabler Frequenz die Betriebsart der Magnetisierungsoptimierung mit $\Delta B = \Delta B_{MAX}$ dadurch erreicht, daß der negative Magnetisierungsstrom (z.B. über einen Shuntwiderstand) gemessen und bei seinem Maximum der Schalttransistor eingeschaltet wird. Die für die Umschwingkreise eingesetzten Kondensatoren und Induktivitäten werden so ausgelegt, daß sich die, je nach Belastung, einstellende Frequenz möglichst wenig ändert. Bei kleiner Belastung wird die Frequenz nach oben und bei großer Belastung nach unten begrenzt ($f_{MIN} \leq f \leq f_{MAX}$).

Sowohl bei frequenzvariablem Betrieb als auch bei reiner Pulsbreitenmodulation wird der Schalttransistor beim Einschalten durch den negativen Magnetisierungsstrom entlastet.

Eine weitere Verringerung von Gewicht und Volumen der Drossel ist möglich, wenn sie gemäß Patentanspruch 2 mit einem Permanentmagneten vormagnetisiert wird. Der Permanentmagnet aus Ferritmaterial wird dabei in den Luftspalt des magnetischen Kreises eingelegt, wobei die Spulenerregung so gerichtet ist, daß sie dem Permanentmagnetfluß entgegengerichtet ist.

Ein Ausführungsbeispiel der Erfindung wird anhand einer Zeichnung im folgenden näher beschrieben. In der Zeichnung zeigen:

Fig. 1    einen DC/DC-Eintaktdurchflußwandler in einem schematischen Schaubild,

Fig. 2    die Kollektor-Emitter-Spannung des Transistors und den Magnetisierungsstrom des Transformators, und

Fig. 3    die Verläufe von Kollektor-Emitter-Spannung und Magnetisierungsstrom bei drei verschiedenen Tastverhältnissen und konstanter Periodendauer.

In Fig. 1 ist ein schematisches Schaltbild eines erfindungsgemäßen DC/DC-Eintaktdurchflußwandlers dargestellt, der beispielsweise als Bordnetz- oder Ladewandler zum Versorgen der
12/24 V-Verbraucher und zum Laden der 12/24 V-Bordbatterie
eines Elektro- oder Hybridfahrzeuges aus der Traktionsbatterie
mit Spannungen zwischen etwa 40 V und 200 V Verwendung finden
kann. Die Eingangsspannung ($U_E$) wird über einen zwischen ihrem
Pluspol und ihrem Minuspol liegenden Eingangskondensator (1)
gepuffert und durch einen Schalttransistor (3) periodisch an
die Primärwicklung 2a eines Transformators (2) angelegt. Die
Ansteuerung des Schalttransistors (3) erfolgt durch eine nicht
näher ausgeführte Ansteuereinheit (5) entweder pulsbreitenmoduliert bei konstanter Frequenz oder magnetisierungsoptimiert
bei variabler Frequenz mit dem Einschaltzeitpunkt bei negativem
Maximum des Magnetisierungsstromes, der bei geschlossenem
Schalttransistor dem Strom durch eine weiter unten beschriebene
Drossel (9) entspricht. Dieser Strom wird durch ein angedeutetes Meßglied (5a) ermittelt und in der Ansteuereinheit (5) verarbeitet.

Der Schaltstrecke des Transistors (3) ist eine Diode (4) in
Durchlaßrichtung vom Emitter zum Kollektor parallelgeschaltet.

Die Entlastungsschaltung des Transistors besteht aus der Reihenschaltung der bereits erwähnten Drossel (9) mit zwei Dioden
(7) und (8), welche vom Minuspol in Durchlaßrichtung zum Pluspol der Eingangsspannung ($U_E$) geschaltet ist, und aus einem
Kondensator (6), der zwischen dem Verbindungspunkt der beiden
Dioden (7, 8) und dem Kollektor des Transistors (3) liegt.

Die Sekundärwicklung (2b) des Transformators (2) ist mit einer
Gleichrichterdiode (10) in Reihe geschaltet, parallel dazu
liegt eine Freilaufdiode (11) und in Reihe mit dieser ist eine
Speicherdrossel (12) geschaltet, an der die Ausgangsspannung
($U_A$) abgreifbar ist. Die Sekundärseite des Wandlers unterscheidet sich also nicht grundlegend von der bekannten Schaltung.

Die Wirkungsweise des erfindungsgemäßen DC/DC-Eintaktdurchflußwandlers wird anhand der Fig. 2 und 3 nachstehend erläutert.

Fig. 2 zeigt den aperiodischen Verlauf von Kollektor-Emitter-
Spannung über dem Magnetisierungsstrom, wobei der Ein/Aus-
Zyklus in verschiedene Zeitabschnitte unterteilt ist. Die
Definition der Zeitabschnitte bezieht sich auf den Magnetisierungsstrom des Transformators (2):

Zeitbereich $t_0 \ldots t_1$:
Von $t_0$ bis kurz vor $t_1$ hat der Transistor eingschaltet und der
Magnetisierungsstrom ($i_M$) steigt liniear an. Der Anstieg des
Magnetisierungsstromes wird beendet, sobald der Transistor
ausgeschaltet hat, die Spannung an den Wicklungen (2a) und (2b)
(in Fig. 1) sich umpolt ($U_{CE} > U_E$) und die Freilaufdiode (11)
den Laststrom übernommen hat. Der Kollektor-Emitter-Spannungsanstieg erfolgt kurz vor $t_1$ sehr schnell, bis $U_{CE} > U_E$ und die
Streuinduktivität entladen ist.

Die im Transformatoer eingespeicherte Magnetisierungsenergie
($E_M$) beträgt mit der Magnetisierungsinduktivität ($L_M$)

$$E_M = \frac{1}{2} L_M \, i_M^2 \qquad\qquad (1)$$

$$\text{mit dem Strom } i_M = \frac{U_E}{L_M} \cdot (t_1 - t_0) \qquad (2)$$

$$E_M = \frac{1}{2} \cdot \frac{U_E^2}{L_M} \cdot (t_1 - t_0)^2 \qquad (3)$$

Zeitbereich $t_1 \ldots t_2$:
Während des Zeitbereichs von $t_1$ bis $t_2$ entlädt sich die Magnetisierungsenergie ($E_M$) des Transformators (2) in den Kondensator
(6), wobei die Periodendauer dieses Reihenschwingkreises durch die Magnetisierungsinduktivität ($L_M$) und die Kapazität ($C_6$) des Kondensators (6) bestimmt ist.

$$t_2 - t_1 = \frac{\pi}{2} \sqrt{L_M C_6} \qquad (4)$$

$$\text{mit} \qquad E_{C6} = \frac{1}{2} \cdot C_6 \cdot U_{C6}^2 \qquad (5)$$

$$\text{und} \qquad \hat{E}_{C6} = \hat{E}_M \qquad (6)$$

folgt für die Spannung

$$U_{C6} = \frac{U_E(t_1 - t_0)}{\sqrt{L_M C_6}} \qquad (7)$$

Da von $t_1$ bis $t_2$ die Diode 11 leitet, ergibt sich (ohne Streuinduktivitäten) die maximale Kollektor-Emitter-Spannung ($U_{CE}$) zu

$$U_{CE} = U_E + U_{C6} \qquad (8)$$

Zum Zeitpunkt $t_2$ ($i_M = 0$) ist der Transformator (2) entmagnetisiert, und der Schalttransistor (3) darf wieder eingeschaltet werden.

Zeitbereich $t_2 \ldots t_3$:
Dieser Zeitabschnitt ist - bei gesperrtem Schalttransistor (3) - dadurch gekennzeichnet, daß die Energie des Kondensators (6) über die Drossel (9), die Diode (8) und die Primärwicklung (2a) in den Eingangskondensator (1) zurückfließt. Bei diesem Rückschwingvorgang wirkt außer der Magnetisierungsinduktivität ($L_M$)
auch die Induktivität ($L_9$) der Drossel (9) auch die Kapazität
($C_6$):

$$t_3 - t_2 = \frac{\widetilde{\pi}}{2} \sqrt{(L_M + L_9) \cdot C_6} \qquad (9)$$

Zum Zeitpunkt ($t_3$) erreicht der negative Magnetisierungsstrom
sein Maximum, und der Kondensator (6) ist bis auf die Eingangsspannung ($U_E$) entladen. Der Zeitpunkt $t_3$ ($i_M = - \hat{i}_M$) dient als
Einschaltzeitpunkt für den Schalttransistor (3), wenn magnetisierungsoptimiert bei der maximal nutzbaren Induktion ($\Delta B =
\Delta B_{MAX}$) gearbeitet werden soll.

Zeitbereich $t_3 \ldots t_4$:
Im anschließenden Zeitbereich von $t_3$ bis $t_4$ wird der Kondensator 6 bis auf - $U_E$ umgeladen und die Energie von der Hauptinduktivität ($L_M$) und der Drossel (9) über die Dioden (4) bzw.
(7) und (8) in den Eingangskondensator zurückgespeist.

Wie aus dem Kollektor-Emitter-Spannungs- und Magnetisierungsstromdiagramm nach Fig. 2 ersichtlich ist, erfüllt die Kombination der Bauelemente (6, 7, 8 und 9) in Verbindung mit der
Primärwicklung (2a) des Transformators und in Verbindung mit
der Ansteuereinheit (5) mehrere vorteilhafte Funktionen:

- die prinzipielle verlustleistungsfreie Abschaltentlastung des Transistors (3),

- die Entmagnetisierung des Transformators (2) an die
  jeweilige Belastung angepaßt,

- Vergrößerung der nutzbaren Induktion $\Delta B$, was zu einem
  kleineren effektiven Kernvolumen führt,

- die Einschalthilfe für den Transistor (3) mit entsprechend geringen Schaltverlusten und

- das Tastverhältnis $V_T$ kann bei kürzeren Umschwingzeiten nach den Gleichungen (4) und (9) wesentlich erhöht werden.

Wesentlich ist, daß die Entmagnetisierungsenergie nur in den Kondensator (6) fließen kann und nur die Spannung am Kondensator (6) zur Entmagnetisierung des Kerns bzw. des magnetischen Kreises führt. Tritt der Fall ein, daß die Spannung am Kondensator (6) das 1,5fache der Eingangsspannung ($U_E$) und damit die Spannung am Schalttransistor (3) das 2,5fache der Eingangsspannung ($U_E$) übersteigt, so wird der Schalttransistor (3) und die Ansteuereinheit (5) durch die Diode (4) geschützt. Die Diode (4) verhindert ein Einschalten des Schalttransistors (3) über dessen Kollektor-Basis-Strecke, sobald die Spannung am Kollektor negativ wird. Die Diode (4) ermöglicht also den Betrieb des Wandlers mit hohen Spannungen am gesperrten Schalttransistor (3) und trägt damit wesentlich zur erwähnten Erhöhung des Tastverhältnisses ($V_T$) bei. Wie anhand der Fig. 3 noch erläutert werden wird, sind mit Hilfe der Diode (4) und ggf. einer entsprechend dimensionierten unlinearen Drossel (9) sowie dem Meßglied (5a) Tastverhältnisse ($V_T$) bis zu Werten von etwa $V_{TMAX} = 0,75$ erreichbar.

Der große Vorteil des größeren Tastverhältnisses ($V_T$) besteht darin, daß mit einem entsprechend der Gleichung

$$i_C = \frac{1}{V_{TMAX} \cdot K} \cdot i_A$$

niedrigeren Kollektorstrom gearbeitet werden kann. Im Primär- und Eingangsfilterkreis führt es zu einem kleineren Effektivstrom und zu geringeren Verlusten. Wird als Schalttransistor ein bipolarer Transistortyp eingesetzt, so benötigt er eine geringere Ansteuerleistung und hat kleinere Durchlaß- und Schaltverluste. Der Transistor muß allerdings für die entsprechend höhere Kollektor-Emitter-Spannung ($U_{CE}$) (Gl. 8) ausgelegt sein; da er aber entlastet abgeschaltet wird und während der Zeit hoher Spannung keinen Kollektorstrom führt, kann der erweiterte Spannungsbereich ($U_{CEX}$) oder ($U_{CEV}$) ausgenützt werden.

Ein weiterer Vorteil des größeren Tastverhältnisses ($V_T$) bezieht sich auf die Speicherdrossel (12). Sie kann bei gleichem maximalen Ausgangsstrom in ihrer Induktivität und damit in Gewicht und Volumen reduziert werden.

Damit auch bei kleinerem Tastverhältnis die Welligkeit des Ausgangsstromes nicht zunimmt, kann eine Induktivität mit unlinearer Kennlinie eingesetzt werden, wobei der Querschnitt des magnetischen Kreises in einem kleineren Bereich teilweise reduziert wird (was z.B. durch einen abgeschrägten Mittelschenkel realisiert werden kann).

Eine weitere Verringerung von Gewicht und Volumen der Speicherdrossel (12) ist möglich, wenn sie mit einem Permanentmagneten vormagnetisiert wird. Der Permanentmagnet aus Ferritmaterial wird dabei in den Luftspalt des magnetischen Kreises eingelegt, wobei die Spuelenerregung so gerichtet ist, daß sie dem Permanentmagnetfluß entgegengerichtet ist. Diese Ausbildung ist in der Zeichnung nicht dargestellt.

Wie schon erläutert worden ist, dient der mit Hilfe des Meßglieds (5a) ermittelte Strom insbesondere der Erfassung des negativen Maximums des Magnetisierungsstromes bei magnetisierungsoptimiertem Betrieb und dem davon abhängigen Einschalten des Schalttransistors (3). Dies hat den Vorteil, daß das Einschalten des Schalttransistors (3) primärseitig erzeugt wird. Eine Einwirkung der Sekundärseite auf den Einschaltzeitpunkt über Optokoppler o.dgl. zur Potentialtrennung ist nicht erforderlich. Das Ausschalten erfolgt abhängig von der Spannungsregelung oder -steuerung auf der Ausgangsseite des Wandlers mit Hilfe eines Optokopplers oder Signalübertragers o.dgl.

Im Gegensatz zu Fig. 2, wo der Wandler nur einmalig angestoßen wird und der negative Magnetisierungsstrom frei ausschwingt, zeigt Fig. 3 drei Belastungszustände des Wandlers mit Pulsbreitenmodulation und der Periodendauer (T).

Im niedrigsten Belastungsfall nach Fig. 3a mit dem Tastverhältnis $V_T$ = 0,25 kann der negative Magnetisierungsstrom $i_M$ auf Null abklingen, während bei den höheren Tastverhältnissen - wie in Fig. 3b mit $V_T$ = 0,5 oder in Fig. 3c mit $V_T$ = 0,75 gezeigt - der Einschaltvorgang bei hohem negativem Magnetisierungsstrom stattfindet. Dabei ergibt sich der Vorteil, daß der nutzbare Flußdichtehub $\Delta$B bis zum Faktor 2 erhöht wird und die Windungszahlen des Transformators entsprechend verringert werden können.

Besonders günstig wirkt es sich aus, wenn die magnetischen Kreise des Transformators (2) und der Drossel (9) (Siehe Gl. 4 und Gl. 9) mit unlinearer magnetischer Kennlinie ausgeführt werden (belastungsabhängige Teilsättigung), so daß bei höherem Tastverhältnis $V_T$ und höherem Strom die Umschwingzeiten ($t_2$ - $t_1$) und ($t_3$ - $t_2$) verkürzt werden und einer kürzeren Entmagnetisierungszeit eine längere Einschaltdauer gegenübersteht. Die Bauelemente werden dabei so ausgelegt, daß erst bei der maximal möglichen Belastung das Maximum des negativen Magnetisierungsstromes erreicht wird.

Bei der zweiten, nicht dargestellten Betriebsart des Wandlers wird ab einem minimalen Belastungszustand die Frequenz freigegeben und der Schalttransistor eingeschaltet, wenn der Magnetisierungsstrom sein negatives Maximum aufweist.

Es ist somit für beide Ansteuerarten charakteristisch, daß sich
die Entmagnetisierung des Transformators bei hohem Tastverhältnis und hoher Belastung durch entsprechend hohes Aufladen der
Drossel (9) und kürzeren Umschwingzeiten der Magnetisierungsenergie selbst stabilisiert.

Ansprüche

1.  DC/DC-Eintaktdurchflußwandler mit einem Transformator, dessen Primärwicklung über einen von einer Ansteuereinheit geschalteten, mit einer wenigstens eine Drossel, eine Diode und einen Kondensator enthaltenden Entlastungsschaltung versehenen Transistor an einer Eingangsgleichspannung liegt, und an dessen Sekundärwicklung über ein aus einer Gleichrichterdiode, einer Freilaufdiode und einer Speicherdrossel bestehendes Netzwerk die zu betreibende Last liegt, dadurch gekennzeichnet, daß der Schaltstrecke des Transistors (3) eine Diode (4) in Durchlaßrichtung vom Emitter zum Kollektor parallelgeschaltet ist und daß in der Entlastungsschaltung die Drossel (9) mit zwei Dioden (7, 8) in Reihenschaltung vom Minuspol in Durchlaßrichtung zum Pluspol der Eingangsgleichspannung ($U_E$) geschaltet ist und der Kondensator (6) zwischen dem Verbindungspunkt der beiden Dioden (7, 8) und dem Kollektor des Transistors (3) liegt.

2.  Durchflußwandler nach Anspruch 1, dadurch gekennzeichnet, daß die Speicherdrossel (12) durch einen in den Luftspalt ihres magnetischen Kreises eingebrachten Permanentmagneten, dessen Magnetfluß der Spulenerregung entgegengerichtet ist, vormagnetisiert ist.

3.  Durchflußwandler nach Anspruch 1 oder 2, dadurch gekennzeichnet, daß bei hohen Spannungen am gesperrten Schalttransistor (3) die Diode (4) dem Schutz des Schalttransistors (3) gegen ein Einschalten über dessen Kollektor-Basis-Strecke dient.

4.  Durchflußwandler nach einem der Ansprüche 1 bis 3, dadurch gekennzeichnet, daß der Drossel (9) ein Meßglied (5a) zugeordnet ist, mit dem der die Drossel (9) durchfließende Strom erfaßbar ist.

5.    Durchflußwandler nach Anspruch 4, dadurch gekennzeichnet, daß das Meßglied (5a) mit der Ansteuereinheit (5) verbunden ist, die den Schalttransistor (3) in Abhängigkeit vom negativen Maximum des die Drossel (9) durchfließenden Stroms in seinen leitenden Zustand schaltet.

6.    Durchflußwandler nach einem der Ansprüche 1 bis 5, dadurch gekennzeichnet, daß die magnetischen Kreise des Transformators (2) und/oder der Drossel (9) unlineare magnetische Kennlinien aufweisen.

7.    Durchflußwandler nach einem der Ansprüche 1 bis 6, dadurch gekennzeichnet, daß ein Tastverhältnis $V_T$ mit einem Wert $V_T > 0,5$ vorgesehen ist, insbesondere ein Wert von etwa $V_{TMAX} = 0,75$.

Fig. 1

Fig. 2

2/2

0246491

Fig. 3a

Fig. 3b

Fig. 3c